# EUROPÄISCHE PATENTSCHRIFT

(11) **EP 2 052 827 B1**
(45) Veröffentlichungstag und Bekanntmachung des Hinweises auf die Patenterteilung: **20.10.2010**
(21) Anmeldenummer: 07020657.8
(22) Anmeldetag: 23.10.2007
(51) Int. Cl.: B29B 17/00, B29B 17/02

(54) **Verfahren und Anlage zur Herstellung eines fügbaren Granulats aus Kunststoffschwerfolienabfällen und einer Recycling-Kunststoffschwerfolie mit verbesserten Eigenschaften.**
Method and apparatus for manufacturing a joinable granulate made of heavy-duty plastic film waste and heavy-duty plastic film with improved characteristics.
Procédé et équipement de fabrication de granulés souples à partir de déchets de feuilles lourdes en matière synthétique, et d'une feuille lourde en matière synthétique de recyclage dotée de caractéristiques améliorées.

(43) Veröffentlichungstag der Anmeldung: 29.04.2009
(73) Patentinhaber: Retro-flex AG, 9487 Bendern (LI)
(72) Erfinder:
(74) Vertreter: Kaminski, Susanne

(56) Entgegenhaltungen:
- DE-A1- 1 940 838
- DE-A1- 10 101 112
- DE-A1- 19 540 366
- DE-B3-102006 005 369
- GB-A- 2 245 570

## Beschreibung

Die Erfindung betrifft ein Verfahren und eine Anlage zur Herstellung eines fremdstoffarmen und thermisch fügbaren Schwerfolien-Granulats aus Abschnitten mindestens einer Schalldämm-Verbund-Schwerfolie sowie ein Verfahren zur Herstellung einer Recycling-Kunststoffschwerfolie mit verbesserten Eigenschaften.

Schalldämmplatten und Schalldämmformteile, die sich aus einer Kunststoffschwerfolie aus viskoelastischen Kunststoffen mit einer Dicke von insbesondere 0,5 mm bis 10 mm zusammensetzen, sind seit langem aus dem Stand der Technik bekannt und kommen insbesondere in den Bereichen des Fahrzeugbaus, der Bodenbelagsindustrie, der Bauindustrie, des Hochbaus sowie im Maschinenbau zur Schalldämmung zum Einsatz. Kunststoffschwerfolien, auch Schwerschichten genannt, setzen sich vor allem aus thermoplastischen Polymeren, insbesondere PE (Polyethylen), EPDM (Ethylen-Propylen-Dien-Kautschuk) und/oder EVA (Ethylenvinylacetat), sowie mineralischen Füllstoffen, wie beispielsweise Kalksteinmehl bzw. Kalkspat (CaCO₃) und Schwerspat (BaSO₄), zusammen. Sie sind thermoplastisch - beispielsweise im Tiefziehverfahren oder mittels Ziehpressen, im Labormassstab im sogenannten Handtuchverfahren - verformbar und zeichnen sich durch hervorragende akustische Eigenschaften, hohe mechanische Festigkeit insbesondere gegen Bruch und Einreissen, Nicht- oder schwere Entflammbarkeit sowie gute chemische Beständigkeit aus.

Aus der DE 1940838, veröffentlich im Jahre 1971, ist eine selbsttragende thermoplastische Kunststoffschwerfolie, deren spezifisches Gewicht bei etwa 2,0 bis 2,5 g/cm liegt, bekannt. Die Kunststoffschwerfolie ist insbesondere 1 bis 10 mm dick. Aufgrund ihres Gehaltes an thermoplastischen Polymeren lässt sich die Folie heiss verformen. Die Kunststoffschwerfolie eignet sich vor allem für Schalldämmzwecke, insbesondere im Kraftfahrzeugbau. Gemäss der Beschreibung enthält die Kunststoffschwerfolie etwa 10 bis 40 Gew.% von Äthylen/Vinylacetat-Mischpolymeren mit einem Vinylacetatgehalt von 10 bis 45, vorzugsweise 15 bis 30 Gew.% und etwa 60 bis 90 Gew.% anorganische Füllstoffe. Der erforderliche Vinylacetatgehalt kann dabei auch in der Weise erreicht werden, dass man zwei Mischpolymere mit unterschiedlichem Vinylacetatgehalt im geeigneten Verhältnis miteinander mischt. Als Füllstoffe finden vorzugsweise anorganische Materialien verhältnismässig hohen spezifischen Gewichts wie Russ, Schwerspat, Kreide, Glimmer oder Schiefermehl, oder Gemische dieser Materialien Verwendung. Zur Verbesserung der Verformbarkeit und zur Erhöhung der Kälteelastizität kann die Schwerfolie gegebenenfalls bis zu 10 Gew.% eines herkömmlichen Weichmachers, z.B. eines Phthalates wie Dioctylphthalat enthalten. Andererseits kann die Schwerfolie auch bis zu etwa 10 Gew.% eines Harzes, z.B. eines Phenolformaldehydharzes bzw. Phenolharzes enthalten, wenn es für einen bestimmten Einsatzzweck erwünscht ist, den Erweichungspunkt der Schwerfolie zu erhöhen. Trotz des relativ hohen Füllstoffanteils von bis zu 90 Gew.% wird ein Produkt erhalten, das nicht nur gute Form- und Temperaturbeständigkeit, sondern auch hohe Elastizität aufweist. Die beschriebene Kunststoffschwerfolie lässt sich gemäss der Beschreibung bei Temperaturen oberhalb 110°C nach den verschiedenen an sich bekannten Verfahren thermoplastisch verformen. Die Schrumpfung bei der Verformung ist äusserst gering und liegt maximal bei etwa 1 %. Beispielsweise kann die Verformung im Tiefziehverfahren erfolgen. Ein weiteres Verfahren, welches sich für bereits mit Dekormaterial wie Schutzfolien oder Trennvliese, mit Vliesmatten oder mit Schaumstoffplatinen kaschierte Schwerfolien bewährt hat, ist das Ziehpressen des Verbundteils unter Patrize und Matrize sowie optional zusätzlicher Tiefziehunterstützung. Die Formgebung orientiert sich dabei beispielsweise an der Form und Kontur des Karosserieteils, auf welches die geformte Matte später aufgebracht werden soll.

Die in der genannten deutschen Patentschrift beschriebene Kunststoffschwerfolie zeichnet sich durch sehr gute akustische, schalldämmende Eigenschaften, eine Formstabilität bis etwa 110°C gemäss der Beschreibung, hohe mechanische Festigkeit insbesondere gegen Bruch und Einreissen, Nicht-Entflammbarkeit sowie gute chemische Beständigkeit gegen Wasser, Salzwasser, verdünnte Säuren und Laugen sowie gegen öl und Benzin aus, so dass sie für eine Verwendung im Kraftfahrzeugbau besonders geeignet ist. Für eine Auskleidung von Motor- und Kofferraum sind ihre gute Temperaturbeständigkeit, insbesondere die Formstabilität im Bereich von etwa -40 bis +110°C sowie ihre chemische Widerstandsfähigkeit neben den hervorragenden Schalldämmeigenschaften von Bedeutung. Eine weitere Verbesserung der chemischen Eigenschaften kann dadurch erreicht werden, dass man die Aussenfläche der Kunststoffschwerfolie mit einer dünnen Polyamidfolie beschichtet oder mit einem Polyamidharz besprüht.

Die vorstehend beschriebene Kunststoffschwerfolie eignet sich nur bedingt für das direkte Aufbringen - durch Aufschmelzen oder Aufkleben - auf Blechteile im Kraftfahrzeug, weil sie ausser der Massenwirkung zur Schalldämmung kaum über schwingungsdämpfende Eigenschaften verfügt.

Es ist zu unterscheiden zwischen der Schalldämmung und Schalldämpfung. Die Schalldämmung bezeichnet die Behinderung der Schallausbreitung von Luftschall oder Körperschall durch Schallreflexion des sich ausbreitenden Schalls, während unter der Schalldämpfung die Behinderung der Schallausbreitung durch Absorption von Luftschall verstanden wird. Bei der Schallabsorption oder Schalldämpfung wird die Schallenergie in Wärmeenergie umgewandelt und dementsprechend die Reflexion an einer Grenzfläche vermindert.

Die aus dem Stand der Technik bekannten, unbeschichteten Kunststoffschwerfolien dienen im Wesentlichen nur zur Schalldämmung und kaum zur Schalldämpfung. Zur Schalldämpfung werden spezielle Dämpfungsfolien mit hohem Verlustmodul, also eher steife, unelastische Materialien auf Bitumen-Harz-Basis als Beläge beim Durchlauf der Karosserie durch die Lackieranlage aufgeschmolzen. Weiters kann durch Auftragen von Beschichtungen auf einer Kunststoffschwerfolie deren schallabsorbierende Wirkung verbessert werden.

Unterschiedliche Verfahren zur Herstellung von Kunststoffschwerfolien, kurz Schwerfolien, sind aus dem Stand der Technik bekannt, beispielsweise das Mischen in Mischknetern, z.B. einem Z-Schaufelkneter, oder in Fluidmischern, z.B. einer Heiz-Kühlmischer-Kombination, zur Zwischenstufe Granulat und weiter über Extruder, Breitschlitzdüse und Walzenstuhl zur Platine oder Endlosbahn, oder als kompakten Batch über Austragsschnecke und Walzwerk zu einer Kalanderanlage, sowie das Spritzgiessen.

Die hergestellten Schwerfolien werden in der Regel oberflächlich kaschiert, als Bahnenware mit Teppichbahnen verbunden, mit textilem Material, Vliesen, Geweben, Schaumstoff beklebt, mit Kunstharzen, vorzugsweise Polyamiden, besprüht und/oder mit Kunststoff- und/oder Metallfolien sowie Schäumen beschichtet, wodurch sich bestimmte Eigenschaften, beispielsweise zusätzliche schalldämpfender Eigenschaften, erzielen lassen. Insbesondere im Bereich des Fahrzeugbaus kommen vornehmlich Verbund-Schwerfolien zum Einsatz, die in Sandwich-Bauweise mehrschichtig aufgebaut sind.

Die heute im Fahrzeugbau zum Einsatz kommenden Schwerfolien haben im Wesentlichen die oben beschriebene Zusammensetzung, die auf thermoplastischen Polymeren und mineralischen Füllstoffen basiert. Die Art und der Anteil an Polymeren und mineralischen bzw. anorganischen Füllstoffen sowie der Anteil weiterer Bestandteile variiert jedoch in gewissem Maße, abhängig vom jeweiligen Einsatzgebiet der Schwerfolie.

Im Fahrzeugbereich ist insbesondere zwischen folgenden Arten von Schalldämmungs- und Schalldämpfungsfolien zu unterscheiden. Zum einen gibt es Schwerfolien für die Aussenbaugruppe des Fahrzeugs, z.B. die Stirnwand aussen, den Getriebetunnel aussen, wobei eine in Sandwich-Bauweise aufgebaute Verbund-Schwerfolie mit einer Schaumstoff-, Textil-, Vlies und/oder Folienschicht zur Anwendung kommt. Die geforderte Temperaturstabilität beträgt in der Regel mindestens 80°C. Die Verbund-Schwerfolie hat eine Masse von etwa 1 bis 10 kg/m². Für die Innenraumisolation werden gleichartige, mit schalldämpfenden Absorberschichten aus Schäumen und Textilvliesplatten erzeugte, meist durch Oberflächenkaschierung optisch aufgewertete Schwerfolien aus hochgefüllten Kunststoffen verwendet. Weiters kommen so genannte Dämpfungsfolien für Antidröhn-Anwendungen im Automobilbau zur Anwendung. Diese bei Temperaturen oberhalb 80°C aufschmelzenden planen Beläge bestehen als Bindemittel aus Bitumina, Harzen und Ölen sowie eher leichten Füllstoffen wie Schiefermehl, Vermiculite, Kreide und auch Kalksteinmehl, aber nicht den spezifisch sehr schweren Baryttypen wie Schwerspat und Bariumferrit. Derartige Dämpfungsfolien oder Antidröhnmatten sind von den oben beschriebenen Schwerfolien und Verbund-Schwerfolien zu unterscheiden.

Die Kunststoffschwerfolien werden grossflächig in Plattenform oder Rollenware hergestellt und thermoplastisch verformt sowie in Form geschnitten. Hierbei entsteht Schnittgut, das keine Verwendung im Fahrzeugbau findet. Während sich die unkaschierte, unbeschichtete und fremdstofffreie Schwerfolie in den Schwerfolien-Herstellungsprozess durch Einarbeitung in die Originalmischung zumindest teilweise zurückführen lässt, wie aus dem Stand der Technik bekannt, sind die kaschierten und ein- oder beidseitig mit Fremdstoffen, wie textilem Material, Vliesen, Matten oder Gelegen aus Glasfasern, Naturfasern und/oder Kunststofffasern sowie Kunststoff- und Metallfolien und Schaumstoffen in Dicken von unter 0,1 mm bis über 10 mm beschichteten Kunststoffschwerfolien bisher nicht rezyklierbar und müssen in aller Regel in Deponien entsorgt werden.

Die bisher aus dem Stand der Technik bekannten Verfahren zur Herstellung einer Kunststoffschwerfolie erfordern ein Ausgangsmaterial, das entweder vollkommen frei von den oben genannten Fremdstoffen ist, insbesondere frei von textilem Material, Natur-, Glas- und Kunststofffasern sowie Metall- und sonstigen Fremdteilchen, oder das diese Fremdstoffe lediglich in einer bestimmten, konstant zu haltenden geringen Konzentration kontinuierlich verteilt enthält. Selbst unter diesen Idealvoraussetzungen war es bisher kaum möglich, eine Schwerfolie aus rezykliertem fremdstoffbehafteten Schwerfolien-Ausgangsmaterial herzustellen, ohne hierbei erhebliche Qualitätseinbussen hinnehmen zu müssen. Diese Qualitätseinbussen sind kleine Löcher oder feine Risse im Plattenmaterial der Kunststoffschwerfolie, welche schon oft beim Kalandrieren aufreissen und das Aussortieren dieser Platinen erforderlich machen oder bei den weiteren Verformungsstufen wie Tiefziehen oder Ziehpressen zu Rissen und Löchern und damit zu noch grösseren Verlusten in der Produktion führen.

Zudem variieren die Art und der Umfang der Beschichtung von Kunststoffschwerfolien erheblich. Bei der Herstellung eines Kraftfahrzeuges kommen unterschiedliche Arten von beschichteten Kunststoffschwerfolien zum Einsatz. Die Beschichtungen bestehen beispielsweise zum einen aus hochflorigem Teppichmaterial, zum anderen aus dünnem Vlies, zum einen aus Schaumstoff und zum anderen aus dünner Kunststoff- oder Metallfolie, oder aus entsprechenden Kombinationen hieraus. Das jeweilige Schnittgut unterscheidet sich folglich in seiner Zusammensetzung erheblich und ist als Ausgangsmaterial für die Herstellung von Schwerschichtfolien ungeeignet. Die einzelnen Schichten sind derart miteinander verbunden, dass eine Trennung der Schichten bzw. eine Trennung der Fremdstoffe von dem Schwerfolienmaterial bisher mittels prozesssicherer, wirtschaftlicher und wiederholbarer Prozesse nicht möglich ist. Weiters vermengen sich beim Schneide-, Sammel- und Transportprozess des Schnittguts regelmässig weitere Fremdstoffe wie Metallteile, kleines Steingut oder Glassplitter mit dem Schnittgut. Diese Fremdstoffe würden zu einer erheblichen Beschädigung der Vorrichtung zur Herstellung der Schwerfolie führen, weshalb bisher eine Verwendung dieses Schnittguts aus Ausgangsmaterial zur erneuten Herstellung einer Schwerfolie in der Praxis gänzlich ausgeschlossen wurde. Aus diesen Gründen galt bisher auch eine in einem Fahrzeug bereits verbaute und mit zahlreichen Fremdstoffen behaftete Schwerfolie bei der Altfahrzeugverwertung als nicht rezyklierfähig. Ein Schliessen der Werkstoffkette galt bisher im Bereich der fremdstoffbehafteten Schwerfolien als unmöglich.

Die durch Schnitt- und sonstige Abfälle von beschichteten Schwerfolien entstehende Abfallmenge stellt ein erhebliches Entsorgungsproblem dar, das bisher nicht hinreichend gelöst werden konnte. Das Entsorgungsproblem wird in Richtung Umweltverunreinigung dadurch besonders gravierend, weil der Anteil an Ölen in den Schwerfolienabfällen eine Verbringung in Deponien erfordert, andererseits aber diese Deponierung aus rechtlichen Gründen zum Teil nicht mehr gestattet ist. Eine Verbrennung dieser Schwermassen mit bis zu 80% an Füllstoffen ist ebenfalls nicht sinnvoll.

In der deutsche Gebrauchsmusterschrift DE 20 2004 012 192 wird zwar eine Schalldämmeinlegeplatte aus thermoplastischen bis gummiartigen Werkstoffen in Dicken von 0,5 bis 6 mm und einer Flächenmasse von 1,0 bis 10 kg/m² bestehend aus miteinander verbundenen Granulatteilchen der Grössen 1,0 bis 6 mm vorzugsweise eines Rezyklats von ursprünglich viscoelastischen plattenförmigen oder geformten Dämmstoffen beschrieben. Dieses Rezyklat wird gemäss der Offenbarung aus Formteilen gewonnen, die aus Materialien wie EPDM, EVA, Polyethylen versetzt mit hohen Anteilen von mineralischen Füllstoffen wie Kalksteinmehl und/oder Schwerspat bestehen und mit Kaschiermaterialien wie textilen Überzügen, Schaumstoffplatinen oder textilen Vliesmatten beschichtet waren. In der Offenbarung wird jedoch weder ein Verfahren zur Herstellung des Rezyklats noch ein Verfahren zur Herstellung der beschriebenen Schalldämmeinlegeplatte beschrieben. Auf die Problematik des undefinierten Fremdstoffanteils wird nicht näher eingegangen.

In der DE 10 2006 005369 wird ein Verfahren zur Herstellung von schallabsorbierenden Formteilen offenbart, welches auf der Verwendung von neu hergestellten und/oder recyclierten thermoplastischen Schmelzfasern, recyclierten Schaumstoffteilchen und recyclierten Schwerschichtteilchen beruht. Eine Aufarbeitung fremdstoffbehafteter Schwerfolien findet in dieser Schrift keine Erwähnung.

Die DE 101 01 112 offenbart Platten aus "einer Polyurethanschicht und wenigstens einer Vliesschicht. Die Polyurethanschicht besteht aus 40 bis 80 Gew.% wiederverwertetem Polyurethanschaum, 5 bis 15 Gew.% wiederverwertetem Polyurethanstaub, 5 bis 15 Gew.% Faserstoffen, 5 bis 20 Gew.% Isocyanat-haltigem Bindemittel und bis zu 10 Gew.% Wasser und sonstigen Zusätzen. In diesem Dokument wird auch ein Herstellungsverfahren für die vorgenannten Kunststoffplatten offenbart, wobei die Bestandteile der Polyurethanschicht, nämlich wiederverwerteter Polyurethanschaum, wiederverwerteter Polyurethanstaub, Faserstoffe, Isocyanat-haltiges Bindemittel, Wasser und sonstige Zusätze in den gewünschten Anteilen gemischt werden.

Die GB-A 2245570 offenbart ein Verfahren zur Wiederwervendung von Polyurethanweichschäume. Es ist daher Aufgabe der Erfindung, ein Verfahren zur Herstellung eines Rezyklats, aus mit Fremdstoffen behafteten Kunststoffschwerfolienabfällen der eingangs genannten Art, das sich als Ausgangsprodukt zur erneuten Herstellung einer Kunststoffschwerfolie eignet, sowie eine Recycling-Kunststoffschwerfolie mit verbesserten insbesondere akustischen Eigenschaften zur Verfügung zu stellen.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung umfasst ein Verfahren zur Herstellung eines fremdstoffarmen und thermisch fügbaren Schwerfolien-Granulats aus Abschnitten mindestens einer schalldämm-Verbund-Schwerfolie.

Unter den Abschnitten kann es sich um Randabschnitte handeln, die bei dem In-Form-Schneiden von Schalldämm-Verbund-Schwerfolie-Platten oder -Rollenware vor oder nach einem allfälligen Umformen entstanden sind, oder um sonstige Teile von Schalldämm-Verbund-Schwerfolien, die beispielsweise beim Verarbeitungsprozess oder bei der Altfahrzeugentsorgung anfallen. Unter einem Abschnitt ist auch eine vollständige Schwerfolienplatte oder -rolle zu verstehen. Die Abschnitte können eine beliebige, nicht begrenzte und ungleichmässige Grösse aufweisen. Die Abschnitte stammen von Schalldämm-Verbund-Schwerfolien, die mindestens eine Schwerfolienschicht und mindestens eine Fremdstoffschicht aufweisen. Unter dem Begriff "Verbund" ist somit die schichtartige Anordnung mindestens einer Schwerfolienschicht und mindestens einer Fremdstoffschicht zu verstehen. Der Verbund kann zwei oder mehrschichtig, insbesondere sandwichartig sein.

Bei der Schwerfolienschicht handelt es sich gattungsgemäss um eine Schicht aus Schwerfolie beliebiger Dicke, insbesondere von 0,5 mm bis über 12 mm, wobei sich die Schwerfolie aus thermoplastischen Polymeren, insbesondere PE (Polyethylen), EPDM (Ethylen-Propylen-Dien-Kautschuk) und/oder EVA (Ethylenvinylacetat), und mineralischen Füllstoffen, insbesondere Kalksteinmehl bzw. Kalkspat (CaCO₃) und Schwerspat (BaSO₄), zusammensetzt. Der Anteil an Füllstoffen beträgt insbesondere 60 bis 90 Gew.% bzw. etwa 40 bis 60 Vol.%, im Speziellen 70 bis 85 Gew.% bzw. etwa 45 bis 55 Vol.%, während der Anteil an Polymeren etwa 10 bis 40 Gew.% bzw. 40 bis 60 Vol.%, im Speziellen 15 bis 30 Gew.% bzw. 45 bis 55 Vol.% beträgt. Teilweise enthält die Schwerfolie zusätzlich Öl zum Quellen und zur besseren Aufnahme der Füllstoffe. Der Ölgehalt beträgt bis über 8 Vol.% bzw. 20 Vol.%. Eine Schwerfolie wird beispielsweise in der DE 1940838 beschrieben.

Die Schwerfolie ist mit mindestens einer Fremdstoffschicht beschichtet, die sich im Wesentlichen zusammensetzt aus Fasern, insbesondere Textilfasern, Naturfasern, Glasfasen und/oder Kunststofffasern, sowie Schaumstoffen, Nicht-Schwerfolien-Kunststofffolien und/oder Metallfolien. Die Fremdstoffschicht kann unter 0,5 mm, beispielsweise im Falle einer Schicht aus einer Nicht-Schwerfolien-Kunststofffolie und/oder Metallfolien, oder auch weit über 30 mm betragen, beispielsweise bei einer Schaumstoffschicht. Insbesondere in der Automobilindustrie werden Schwerfolien mit Textilien und Baumwollvlies geharzt und verpresst sowie mit Teppichbahnen und voluminösen Schaumstoffrücken mittels Klebstoffen verbunden. Der Begriff "Folie" ist allgemein als eine Schicht beliebiger Dicke und Konsistenz zu verstehen, die sowohl flexibel wie auch plattenartig steif sein kann.

Unter den Abschnitten ist allgemein ein beliebiges Gemisch aus Abschnitten von Verbund-Schwerfolien gleicher oder unterschiedlicher Zusammensetzung und Beschichtung zu verstehen, wobei selbstverständlich auch unbeschichtete Abschnitte von Schwerfolien sowie einzelne Fremdstoffteile in dem Gemisch enthalten sein können.

Ein derartiges Gemisch an Abschnitten galt bisher als nicht rezyklierbar und musste bisher entsorgt werden.

Das erfindungsgemässe Verfahren zur Herstellung des fremdstoffarmen und thermisch fügbaren Schwerfolien-Granulats aus den Abschnitten mindestens einer Schalldämm-Verbund-Schwerfolie wird im Folgenden zunächst allgemein und bei der Figurenbeschreibung anhand eines konkreten Ausführungsbeispiels beschrieben.

Erfindungsgemäss wird ein Vorzerkleinerer, beispielsweise ein Mehrwellenschredder mit mindestens zwei langsamlaufenden Schneidwellen oder ein beliebiger anderer Vorzerkleinerer, mit den Abschnitten der Verbund-Schwerfolie beschickt. Das Beschicken kann z.B. mittels eines Greifbaggers stossweise und nicht zwangsläufig kontinuierlich erfolgen. Der Vorzerkleinerer zerkleinert die Abschnitte in vorzerkleinerte Abschnitte begrenzter Grösse. Ziel der Vorzerkleinerung ist es, die unterschiedlich grossen Abschnitte derart zu zerkleinern, dass die Grösse der Abschnitte begrenzt wird. Die vorzerkleinerten Abschnitte werden im Wesentlichen mengenkonstant und kontinuierlich ausgegeben.

In einem darauf folgenden Schritt wird ein Nachzerkleinerer mengenkonstant kontinuierlich mit den vorzerkleinerten Abschnitten beschickt. Das mengenkonstante kontinuierliche Beschicken des Nachzerkleinerers mit den vorzerkleinerten Abschnitten erfolgt insbesondere mittels eines vorzugsweise frequenzgesteuerten ersten Transportbandes. Das Beschicken erfolgt vorzugsweise derart, dass die vorzerkleinerten Abschnitte kontinuierlich gleichbleibend möglichst ohne Unterbrechung mengenkonstant dem Nachzerkleinerer zugeführt werden. Der Nachzerkleinerer ist insbesondere als Schneidmühle ausgebildet und hat beispielsweise eine Sieblochweite von 3 mm bis 12 mm, insbesondere von 6 mm bis 8 mm. Alternativ kann ein beliebiger anderer geeigneter Nachzerkleinerer zum Einsatz kommen. Mittels des Nachzerkleinerers werden die vorzerkleinerten Abschnitte in nachzerkleinertes Mahlgut mit einer Korngrösse von maximal 10 mm, insbesondere maximal 8 mm, durch Schneiden und Reiben nachzerkleinert. Durch den Zerkleinerungs- und Reibungsprozess im Inneren des Nachzerkleinerers werden die Fremdstoffschichtmaterialien grösstenteils von der Schwerfolienschicht gelöst und bei erreichen einer Maximalabmessung, die sich insbesondere durch die Sieblochweite der Scheidmühle bestimmt, abgegeben. Der Querschnitt des nachzerkleinerten Mahlguts hat etwa einen Grenzdurchmesser von 0,5 bis 8 mm, abhängig von der Sieblochweite. Die Mahlgutgrösse ist hierbei nicht konstant, jedoch begrenzt. Die Länge des nachzerkleinerten Mahlguts kann bedingt durch die Funktionsweise einer Schneidmühle variieren. Im Schnitt wird jedoch ein granulatartige Mahlgut ausgegeben, das nur sehr vereinzelt steifenartige Partikel beinhaltet, die im Folgeverfahren ausgeschieden werden können.

Das nachzerkleinerte Mahlgut wird nun kontinuierlich - vorzugsweise mengenkonstant - von dem Nachzerkleinerer in einen Windsichter gefördert, wobei das kontinuierliche Fördern beispielsweise mittels eines pneumatischen Fördersystems erfolgt. Im Windsichter wird ein vorgebbarer Anteil eines im Wesentlichen Faser- und/oder Schaumstoffanteile enthaltenden Leichtanteils im nachzerkleinerten Mahlgut durch Durchströmen des Mahlguts mit einem Sichtluftstrom kontinuierlich abgetrennt. Der Leichtanteil bezieht sich hierbei auf denjenigen Anteil des nachzerkleinerten Mahlguts, der leichter als der Schwerfolienschichtanteil ist. Der Reinheitsgrad, also der Anteil an dem verbleibenden Leichtanteil im restlichen Anteil des Mahlguts, ist insbesondere durch Variieren des Sichtluftstroms einstellbar. Somit ist es möglich, dass ein definierbarer Anteil des insbesondere fasrigen und textilen Leichtanteils im Mahlgut enthalten bleibt. Der restliche, unerwünschte Leichtanteil wird beispielsweise pneumatisch einer Sammelstation zugeführt.

Der Windsichter ist insbesondere als ein Steigrohrsichter, im Speziellen als ein Zick-Zack-Sichter, ausgebildet ist. Zick-Zack-Sichter sind aus dem Stand der Technik bekannt und bestehen im Wesentlichen aus einem senkrecht stehenden Kanal, der zick-zack-artig verläuft und einem aufgestellten Treppenprofil ähnelt. Der Blechkanal wird von unten mit einem einstellbaren Luftdruck durchströmt. Von oben wird das nachzerkleinerte Mahlgut zugeführt. Das Mahlgut bewegt sich in Folge der Schwerkraft abwärts des Kanals. An jedem Knick des Kanals muss das Mahlgut den Luftstrom durchqueren, sodass an jedem Knick eine Querdurchströmung erfolgt, bei welcher ein insbesondere von der Intensität des Luftstroms abhängiger Anteil des im Mahlgut enthaltenen Leichtanteils durch den Luftstrom mitgerissen, aufwärts befördert und ausgeschieden wird. Derartige Sichter werden auch als Schwerkraft-Gegenstrom-Sichter bezeichnet. Der Fachmann ist sich bewusst, dass anstelle eines Windsichters andere Arten von Sichtern zum Abtrennen eines Leichtanteils im nachzerkleinerten Mahlgut eingesetzt werden können.

Das windgesichtete Mahlgut wird von dem Windsichter in ein Abscheidungs- und Siebungssystem gefördert, beispielsweise mittels eines dritten Fördersystems, das z.B. als Transportband ausgebildet ist. Durch das Abscheidungs- und Siebungssystem erfolgt ein Abtrennen eines im Wesentlichen Faserklumpen, Staubklumpen, streifenartige Partikel, Metalle und sonstige Fremdstoffe enthaltenden Störstoffanteils, der sich noch im windgesichteten Mahlgut befindet.

Beispielsweise weist das Abscheidungs- und Siebungssystem mindestens eine zum Absieben von streifenartige Partikel, Faserklumpen und Staubklumpen ausgebildete Siebmaschine auf, wobei im Schritt des Abtrennens des Störstoffanteils streifenartige Partikel, Faserklumpen und Staubklumpen aus dem Mahlgut abgetrennt werden. Die Siebmaschine hat insbesondere erste Siebe mit einer Sieblochweite von 3 mm bis 12 mm. Bei dieser Grobsiebung werden vor allem Textilklumpen bzw. Faser- und Staubklumpen, die einem Wattebausch ähneln, sowie streifenartige Partikel mit einem Linearsieb mit einem ersten Sieb, insbesondere mehreren - im Speziellen zwei übereinanderliegenden - ersten Sieben, abgesiebt. Die Entstehung dieser Klumpen erfolgt hauptsächlich im Rohrleistungssystem durch elektrostatische Aufladung oder durch Verwicklung im Fördersystem.

Alternativ oder ergänzend umfasst das Abscheidungs- und Siebungssystem mindestens einen zum Abscheiden von ferromagnetischen Metallpartikeln ausgebildeten Fe-Metallabscheider, wobei im Schritt des Abtrennens des Störstoffanteils ferromagnetische Metallpartikel aus dem Mahlgut abgetrennt werden. Unterschiedliche Arten von Fe-Metallabscheidern sind aus dem Stand der Technik bekannt. Beispielsweise wird das Mahlgut breitflächig auf ein Transportband gestreut, wobei die Fe-Abscheidung mittels mindestens eines über dem Transportband angebrachten Magneten erfolgt, so dass Eisenmetalle aus dem Mahrgut abgeschieden werden.

Ebenfalls alternativ oder zusätzlich ist das Abscheidungs- und Siebungssystem zum im Wesentlichen vollständigen Abscheiden eines im Wesentlichen Nichteisenmetalle, Steingut, Glas und sonstige Fremdstoffe enthaltenden Schwerstörstoffanteils im Mahlgut ausgebildet, wobei im Schritt des Abtrennens des Störstoffanteils der Schwerstörstoffanteil im Mahlgut abgetrennt wird. Unter dem Schwerstoffanteil ist hierbei derjenige Anteil im Mahlgut zu verstehen, der schwerer ist als der Schwerfolienschichtanteil. In einer möglichen Ausführungsform besitzt das Abscheidungs- und Siebungssystem hierzu mindestens eine Trenntischmaschine mit mindestens einem als schiefe Ebene angeordneten, vibrierenden und mit einem Luftstrom beaufschlagten zweiten Sieb zum Abscheiden des Schwerstörstoffanteils. Vorzugsweise hat die Trenntischmaschine eine Absaugung zum Abführen eines Staubanteils im Mahlgut. Zur Abscheidung des Schwerstoffanteils ist es alternativ oder ergänzend weiters möglich, im Abscheidungs- und Siebungssystem mindestens einen zweiten Windsichter, insbesondere einen zweiten Zick-Zack-Sichter, zum Abscheiden des Schwerstörstoffanteils vorzusehen.

Das restliche Mahlgut bildet das erfindungsgemässe fremdstoffarme Schwerfolien-Granulat. In einer Weiterbildung dieser Erfindung wird das Schwerfolien-Granulat von dem Abscheidungs- und Siebungssystem zu einer Abfüllanlage gefördert und in Transportbehältnisse, beispielsweise so genannte Big Bags, abgefüllt.

Unter einem Fördersystem ist allgemein jede Art von Einrichtung zur Förderung des Mahlguts von einem Ort zu einem anderen zu verstehen. Bei einem Fördersystem kann es sich beispielsweise um ein Förderband, um ein Becherwerk, ein pneumatisches Rohrsystem, ein Fallrohr, eine Rutsche oder eine sonstige Fördereinrichtung handeln, wobei das Fördern auch mittels Schwerkraft, beispielsweise in einem Fallrohr oder frei in der Luft, erfolgen kann.

Zur Erzielung eines konstanten und gleichmässig auf die Gesamtmenge verteilten, restlichen Fremdstoffanteils ist es von Vorteil, wenn das Beschicken des Nachzerkleinerers, insbesondere der Schneidmühle, sowie das Beschicken des Windsichters, jeweils mengenkonstant kontinuierlich erfolgt. Dieser Verfahrensabschnitt sollte daher vorzugsweise in Form eines kontinuierlichen und während des Verfahrensablaufs ununterbrochenen Prozesses ablaufen, um beste Ergebnisse zu erzielen. Die restlichen Verfahrensschritte können weitgehend ohne wesentlichen Einfluss auf das Verfahrenserzeugnis gegebenenfalls gesondert und zeitlich versetzt - beispielsweise an getrennten Orten in unterschiedlichen Fertigungsanlagen - ablaufen.

Das Schwerfolien-Granulat besteht nach Durchlaufen des erfindungsgemässen Verfahrens weitgehend aus Partikeln der Schwerfolienschicht und ist im Wesentlichen frei von Bestandteilen der Fremdstoffschicht. Es ist somit gelungen, mittels eines industrietauglichen und kontinuierlich ablaufenden Verfahrens aus einer Verbund-Schwerfolie ein rezykliertes fremdstoffarmes Schwerfolien-Granulat zu gewinnen. Der Fremdstoffanteil kann durch entsprechendes Wählen der Prozessparameter, insbesondere des Sichtluftstroms und der Sieblochweiten, gezielt gesteuert werden. Aufgrund des konstanten Fremdstoffanteils ist es möglich, das Schwerfolien-Granulat in einem fremdstoffsensiblen Folgeprozess weiterzuverarbeiten.

Es ist möglich, das neuartige fremdstoffarme Schwerfolien-Granulat in den aus dem Stand der Technik bekannten Schwerfolien-Herstellungsprozess der Extrusion oder Kalandrierung durch Einarbeitung in die Originalmischung zurückzuführen, wobei wesentlich bessere Ergebnisse erzielt werden können als im Falle eines fremdstoffreichen Granulats, dessen Fremdstoffanteil nicht konstant ist. Weiters kann das fremdstoffarme Schwerfolien-Granulat auf sonstige Art und Weise weiterverarbeitet werden und in geeignete Prozesse einfliessen.

Versuche haben gezeigt, dass sich mittels eines zwar fremdstoffarmen jedoch zwangsläufig mit sehr kleinen Mengen an Fremdstoffen behafteten rezyklierten Granulats als Ausgangsstoff nicht derart gute Ergebnisse bei der Herstellung einer neuen Schwerfolie durch Anwendung der bekannten Verfahren erzielen lassen, als dies bei Verwendung eines frischen und reinen Ausgangsstoffs der Fall ist. Nach wie vor sind Qualitätseinbussen nicht auszuschliessen, die in Form kleiner Löcher oder feiner Risse, die zum Teil beim Kalandrieren aufreissen oder bei den weiteren Verformungsstufen wie Tiefziehen oder Ziehpressen zu Rissen und Löchern führen, auftreten.

Überraschenderweise hat sich herausgestellt, dass sich das erfindungsgemässe und bisher unbekannte Schwerfolien-Granulat als Ausgangsstoff für ein Verfahren eignet, das bisher nicht für die Herstellung von Schwerfolien in Erwägung gezogen wurde, da die bisher verfügbaren Ausgangsstoffe eine Schwerfolienherstellung mittels dieses Verfahrens nicht ermöglicht haben.

In der EP 1 045 751 B1 und der DE 197 51 516 A1 wird ein Verfahren zur Herstellung von thermofixierten Bahnen aus thermoplastischen Polymer-Materialteilchen beschrieben. Versuche haben bereits gezeigt, dass sich dieses Verfahren nur bedingt zur Herstellung einer Schwerfolie durch Verwendung reinen Schwerfoliengranulats eignet, da sich das reine Schwerfoliengranulat als nicht ausreichend thermisch fügefreundlich erwiesen hat. Überraschenderweise eignet sich das erfindungsgemässe fremdstoffarme Schwerfolien-Granulat ausgezeichnet als Ausgangsstoff für das in der EP 1 045 751 B1 und der DE 197 51 516 A1 allgemein für thermoplastische Polymer-Materialteilchen beschriebene Verfahren und zur Herstellung einer Recycling-Kunststoffschwerfolie, da die in geringen Mengen im erfindungsgemässen Schwerfolien-Granulat enthaltenen Fremdstoffe - insbesondere Fasern, Schaumstoffreste, Nicht-Schwerfolien-Kunststofffolienanteile und Stäube - dem Granulat eine verbesserte thermische Fügefreundlichkeit verleihen.

Die Erfindung umfasst daher auch ein auf dem allgemeinen Verfahren der EP 1 045 751 B1 und der DE 197 51 516 A1 basierendes, weiterentwickeltes Verfahren zur Herstellung einer Recycling-Kunststoffschwerfolie aus Abschnitten mindestens einer Schalldämm-Verbund-Schwerfolie. Zunächst wird das fremdstoffarme Schwerfolien-Granulat durch das beschriebene erfindungsgemässe Verfahren zur Herstellung eines fremdstoffarmen und thermisch fügbaren Schwerfolien-Granulats aus Abschnitten mindestens einer Schalldämm-Verbund-Schwerfolie hergestellt. Das Schwerfolien-Granulat wird auf ein hitzebeständiges unteres Transportband zu einer flächigen Ausgangsschicht vorgegebener Höhe, insbesondere in einem Vorwärmabschnitt gleichmässig flächig aufgestreut. Die Ausgangsschicht wird mit einem hitzebeständigen oberen Transportband abgedeckt. Die Ausgangsschicht wird durch einen Heizabschnitt und einen Abkühlabschnitt mittels synchronen Bewegens des unteren Transportbandes und des oberen Transportbandes geführt. Der Abstand zwischen dem unteren Transportband und dem oberen Transportband wird zumindest im Heizabschnitt und im Abkühlabschnitt im Wesentlichen gleich der Dicke der fertigen Recycling-Kunststoffschwerfolie gehalten. Das Führen durch den Heizabschnitt und einen Abkühlabschnitt erfolgt derart, dass das Schwerfolien-Granulat einem vorgegebenen Druckbereich ausgesetzt wird und dass im Heizabschnitt eine Ineinanderfliessen und Untereinanderverschmelzen des Schwerfolien-Granulats erfolgt. Die aus dem Abkühlabschnitt geführte Schicht bildet die Recycling-Kunststoffschwerfolie.

Vorzugsweise erfolgt das Führen der Ausgangsschicht durch den Heizabschnitt derart, dass im Heizabschnitt ein nur teilweises Ineinanderfliessen und Untereinanderverschmelzen des Schwerfolien-Granulats stattfindet, so dass die Recycling-Kunststoffschwerfolie eine poröse Beschaffenheit aufweist. Die Prozessparameter, insbesondere die Temperaturen im Heizabschnitt und Abkühlabschnitt, der Druckbereich sowie die Fördergeschwindigkeit und -länge sind also derart gewählt, dass es nicht zu einer vollständigen Schmelze sondern nur zu einem teilweisen Schmelzen und teilweisen Ineinanderfliessen des Granulats kommt, wobei eine ausreichende Bindung zwischen den aufgeheizten Granulatteilchen entsteht.

Überraschend wurde herausgefunden, dass die durch dieses Verfahren gewonnene, insbesondere poröse Recycling-Kunststoffschwerfolie zahlreiche verbesserte Eigenschaften gegenüber einer aus neuen Ausgangsstoffen mittels der bekannten Kalander- oder Extruderverfahren hergestellten Schwerfolie besitzt. Während die bekannten unbeschichteten Schwerfolien hauptsächlich schalldämmende, jedoch nur bedingt schalldämpfende Eigenschaften aufweisen, zeichnet sich die durch das erfindungsgemässe Verfahren gewonnene Recycling-Kunststoffschwerfolie auch durch hervorragende Schallabsorptionseigenschaften aus. Die für eine Schwerfolie ungewöhnlich ausgeprägte Absorption des Luftschalls geschieht aufgrund der Porosität des offenporigen Materials, das eine grosse innere Oberfläche aufweist.

Mittels der erfindungsgemässen Verfahren ist es somit nicht nur möglich, aus Abschnitten von Schalldämm-Verbund-Schwerfolien ein fremdstoffarmes Granulat und hieraus eine Recycling-Kunststoffschwerfolie herzustellen, sondern auch eine Kunststoffschwerfolie mit verbesserten Eigenschaften zur Verfügung zu stellen.

Weiters umfasst die Erfindung eine Schwerfolien-Recyclinganlage zur Durchführung des Verfahrens zur Herstellung des fremdstoffarmen und thermisch fügbaren Schwerfolien-Granulats.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben. Im Einzelnen zeigen:
- Fig. 1: den Ablauf des Verfahrens zur Herstellung des Schwerfolien-Granulats in Form eines Flussdiagramms;
- Fig. 2: eine schematische Darstellung des Verfahrensablaufs und einer Schwerfolien-Recyclinganlage in einer ersten Ausführungsform;
- Fig. 3: eine schematische Darstellung des Verfahrensablaufs und einer Schwerfolien-Recyclinganlage in einer zweiten Ausführungsform; und
- Fig. 4: eine Vorrichtung zur Herstellung einer Recycling- Kunststoffschwerfolie aus dem Schwerfolien-Granulat.

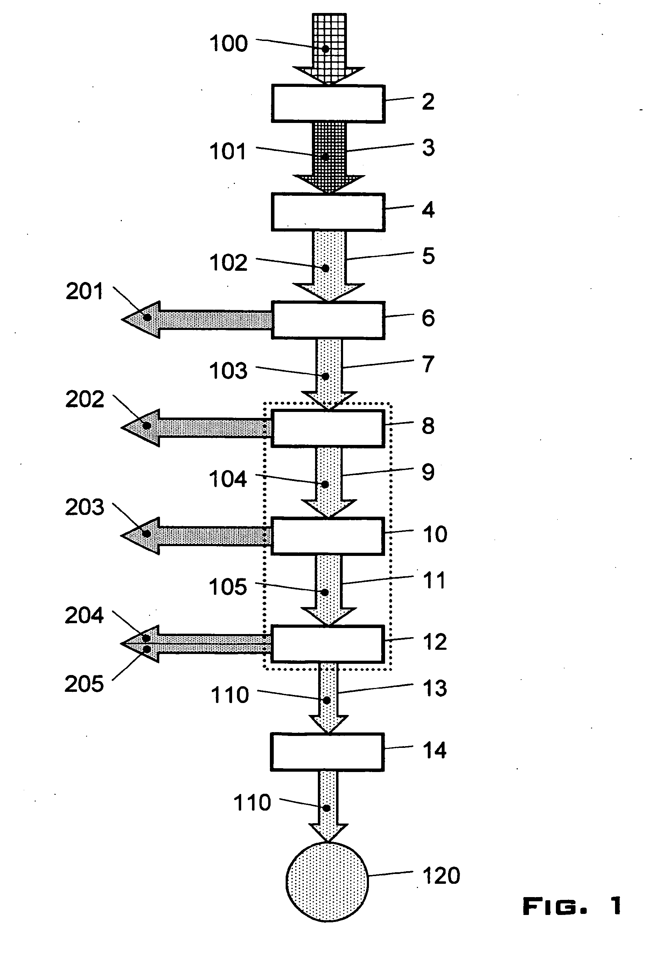

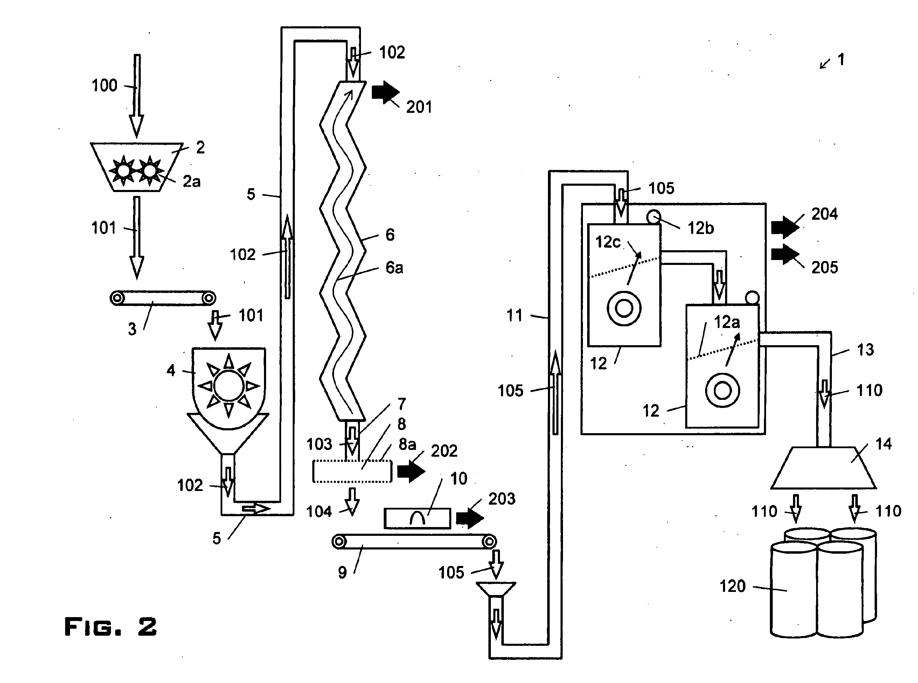

In Figur 1 ist der Ablauf des erfindungsgemässen Verfahrens zur Herstellung eines fremdstoffarmen und thermisch fügbaren Schwerfolien-Granulats 110 aus Abschnitten 100 mindestens einer Schalldämm-Verbund-Schwerfolie schematisch mittels eines Flussdiagramms veranschaulicht. Ein Vorzerkleinerer 2 wird mit den Abschnitten 100 der Verbund-Schwerfolie beschickt. Die Abschnitte 100 werden mittels des Vorzerkleinerers 2 in vorzerkleinerte Abschnitte 101 begrenzter Grösse vorzerkleinert. Die vorzerkleinerten Abschnitte 101 werden mittels eines ersten Transportbandes 3 mengenkonstant kontinuierlich einem Nachzerkleinerer 4 zugeführt. Dort werden die vorzerkleinerten Abschnitte 101 kontinuierlich in nachzerkleinertes Mahlgut 102 mit einer Korngrösse von maximal 10 mm, insbesondere maximal 8 mm, durch Schneiden und Reiben nachzerkleinert. Das nachzerkleinerte Mahlgut 102 wird kontinuierlich von dem Nachzerkleinerer 4 in einen Windsichter 6 mittels eines pneumatischen Fördersystems 5 gefördert. Ein vorgebbarer Anteil eines im Wesentlichen Faser- und/oder Schaumstoffanteile enthaltenden Leichtanteils 201 - bezogen auf den Schwerfolienschichtanteil - im nachzerkleinerten Mahlgut 102 wird kontinuierlich durch Durchströmen des Mahlguts 102 mit einem Sichtluftstrom 6a (Figur 2) in dem Windsichter 6 abgetrennt. Abhängig vom der Zusammensetzung der Abschnitte 100 beträgt der abgetrennte Leichtanteil 201 durchschnittlich etwa 0 bis 50%. Das windgesichtete Mahlgut 103 wird mittels eines dritten Fördersystems 7 zu einem Abscheidungs- und Siebungssystem 8, 10, 12, das mittels des gepunkteten Rechtecks allgemein dargestellt ist, gefördert. Im Abscheidungs- und Siebungssystem 8, 10, 12 wird ein im Wesentlichen streifenartige Partikel, Faserklumpen, Staubklumpen, Metalle und sonstige Fremdstoffe enthaltender Störstoffanteil 202, 203, 204, 205 aus dem windgesichteten Mahlgut 103 abgetrennt.

Im Einzelnen werden im Abscheidungs- und Siebungssystem zunächst mittels einer Siebmaschine 8 streifenartige Partikel, Faserklumpen und Staubklumpen 202 aus dem Mahlgut 103 abgetrennt. Diese Faserklumpen und Staubklumpen 202 bilden abhängig vom der Zusammensetzung der Abschnitte 100 durchschnittlich etwa 0 bis 10% des Ausgangsmaterials 100. Das Mahlgut 104 nach der Siebmaschine 8 wird mittels eines vierten Fördersystems 9 in einen Fe-Metallabscheider 10 transportiert. Im Fe-Metallabscheider 10 werden ferromagnetische Metallpartikel 203 aus dem Mahlgut 104 abgetrennt. Abhängig von der Zusammensetzung des Ausgangsmaterials beträgt der Anteil der Abscheidung durchschnittlich etwa 0 bis 10%. Das Mahlgut 105 nach dem Fe-Metallabscheider 10 wird durch ein fünftes Fördersystem 11 einem Abscheidungs- und Siebungssystem 12 zum im Wesentlichen vollständigen Abscheiden eines im Wesentlichen Nichteisenmetalle und sonstige Fremdstoffe enthaltenden Schwerstörstoffanteils 204 im Mahlgut 105, insbesondere einer Trenntischmaschine 12, zugeführt. Hier wird ein Schwerstörstoffanteil 204 - bezogen auf den Schwerfolienschichtanteil - im Mahlgut 105 abgetrennt, der durchschnittlich etwa 0 bis 20% des Ausgangsmaterials 100 ausmacht. Die Trenntischmaschine 12 besitzt eine Absaugung 12b (Figur 2) zum Abführen eines Staubanteils 205 im Mahlgut 105. Der Staubanteil beträgt im Durchschnitt etwa 0 bis 20%.

Das restliche Mahlgut bildet das fremdstoffarme Schwerfolien-Granulat 110. Dieses wird von dem Abscheidungs- und Siebungssystem 8, 10, 12 mittels eines sechsten Fördersystems 13 zu einer Abfüllanlage 14 befördert und durch die Abfüllanlage 14 in mindestens ein Transportbehältnis 120 abgefüllt.

Figur 2 zeigt in einer schematischen Darstellung eine Schwerfolien-Recyclinganlage sowie den bereits in Figur 1 allgemein veranschaulichten Verfahrensablaufs anhand eines Beispiels.

Die Schwerfolien-Recyclinganlage umfasst einen Vorzerkleinerer, der als Mehrwellenschredder 2 mit mindestens zwei langsamlaufenden Schneidwellen 2a ausgebildet ist. Der Mehrwellenschredder 2 ist zum Vorzerkleinern von Abschnitten 100 einer Verbund-Schwerfolie in vorzerkleinerte Abschnitte 101 begrenzter Grösse ausgebildet. Diese fallen auf ein erstes Transportband 3, das frequenzgesteuert die vorzerkleinerten Abschnitte 101 in einen Nachzerkleinerer 4 gibt und diesen somit mengenkonstanten kontinuierlich beschickt.

Der Nachzerkleinerer wird von einer Schneidmühle 4 gebildet, die zum kontinuierlichen Nachzerkleinern der vorzerkleinerten Abschnitten 101 in nachzerkleinertes Mahlgut 102 mit einer Korngrösse von maximal 10 mm, insbesondere maximal 8 mm, durch Schneiden und Reiben ausgebildet ist. Vorzugsweise hat die Schneidmühle 4 eine Sieblochweite von 3 mm bis 12 mm, insbesondere von 6 mm bis 8 mm. Das nachzerkleinerte Mahlgut 102 wird von einem zweiten Fördersystem 5, bei welchem es sich um ein pneumatisches Fördersystem 5 handelt, kontinuierlich von dem Nachzerkleinerer 4 in einen Windsichter 6 befördert.

Der Windsichter ist ein Steigrohrsichter, der als ein Zick-Zack-Sichter 6 ausgebildet ist. Im Zick-Zack-Sichter 6 wird kontinuierlich eines vorgebbarer Anteil eines im Wesentlichen Fasern- und/oder Schaumstoffanteile enthaltenden Leichtanteils 201, der leichter ist als der Schwerfolienschichtahteil, im nachzerkleinerten Mahlgut 102 durch Durchströmen des von oben nach unten fallenden Mahlguts 102 mit einem gegenläufig nach oben strömenden Sichtluftstrom 6a abgetrennt.

Das windgesichtete Mahlgut 103 fällt über ein drittes Fördersystem 7, ein Fallrohr, in ein Abscheidungs- und Siebungssystem 8, 10, 12, das zum Abtrennen eines im Wesentlichen streifenartige Partikel, Faserklumpen, Staubklumpen, Metalle und sonstige Fremdstoffe enthaltenden Störstoffanteils 202, 203, 204, 205 im windgesichteten Mahlgut 103 ausgebildet ist. Das Abscheidungs- und Siebungssystem 8, 10, 12 wird im Folgenden genauer beschrieben.

Das windgesichtete Mahlgut 103 fällt auf eine zum Absieben von streifenartige Partikel, Faserklumpen und Staubklumpen 202 aus dem Mahlgut 103 ausgebildete Siebmaschine 8, die insbesondere erste Siebe 8a mit einer Sieblochweite von 3 mm bis 12 mm besitzt. Das Mahlgut 104, welches die Siebmaschine 8 durchlaufen hat, wird auf ein viertes Fördersystem 9, ein Transportband, gestreut und unter einem Fe-Metallabscheider 10 durchgeführt, der ferromagnetische Metallpartikeln 203 aus dem Mahlgut 104 aussondert. Das Mahlgut 105, das den Fe-Metallabscheider 10 durchlaufen hat, wird von einem fünften Fördersystem, einem Becherwerk, Trenntischmaschinen 12, die in Reihe angeordnet sind, zugeführt. Die Trenntischmaschinen 12 umfassen jeweils als schiefe Ebene angeordnete, vibrierende und mit einem Luftstrom 12c von unten beaufschlagte zweite Siebe 12a zum im Wesentlichen vollständigen Abscheiden eines Schwerstörstoffanteils 204 im Mahlgut 105, der schwerer ist als das reine Scherfolienmahlgut. Die Trenntischmaschinen 12 haben ausserdem eine Absaugung 12b zum Abführen eines Staubanteils 205 im Mahlgut 105. Das restliche Mahlgut, welches die Trenntischmaschinen 12 durchquert hat, bildet das fremdstoffarme Schwerfolien-Granulat 110.

Das Schwerfolien-Granulat 110 wird nun mittels eines sechsten Fördersystems 13, einem Förderrohr, einer Abfüllanlage 14 zugeführt, in welcher das Schwerfolien-Granulat 110 in Transportbehältnisse 120, beispielsweise Säcken bzw. so genannten Big Bags, abgefüllt wird.

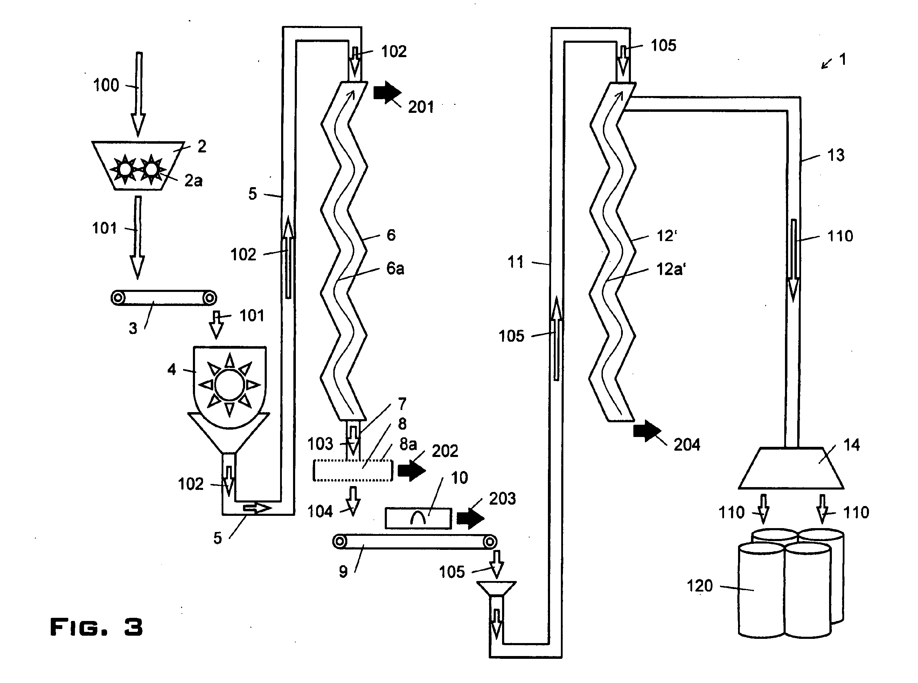

In Figur 3 ist eine alternative Ausführungsform zu der in Figur 2 gezeigten Variante dargestellt. Anstelle mehrerer Trenntischmaschinen 12 kommt hier ein zweiter Windsichter in Form eines zweiten Zick-Zack-Sichters 12' zum Abscheiden des Schwerstörstoffanteils 204, der schwerer ist als das Schwerfolienanteil, zum Einsatz. Die von dem zweiten Sichtluftstrom 12a' erfasste Leichtfraktion bildet in diesem Fall das Schwerfolien-Granulat 110, welches ebenfalls der Abfüllanlage 14 zugeführt wird. Da der restliche Aufbau der Anlage aus Figur 2 entspricht, wird auf eine erneute Erläuterung der restlichen Merkmale und Bezugszeichen an dieser Stelle verzichtet.

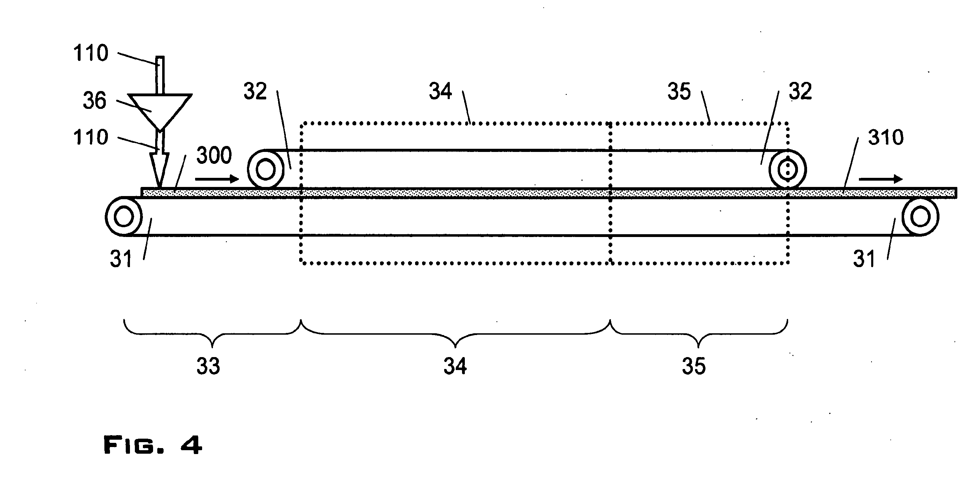

Figur 4 zeigt eine Vorrichtung zur Herstellung einer Recycling-Kunststoffschwerfolie aus dem Schwerfolien-Granulat und veranschaulicht das zugrunde liegende Verfahren. Die Vorrichtung umfasst ein hitzebeständiges unteres Transportband 31 und ein sich in beabstandeter Gegenüberlage oberhalb des unteren Transportbands 31 befindliches hitzebeständiges, kürzeres oberes Transportband 32. Die Vorrichtung besitzt einen optionalen Vorwärmabschnitt 33, einen Heizabschnitt 34 und einen Abkühlabschnitt 35, wobei sich das untere Transportband 31 über alle drei Abschnitte und das obere Transportband 32 im Wesentlichen nur über den Heizabschnitt 34 und den Abkühlabschnitt 35 erstreckt. Im Vorwärmabschnitt 33 ist oberhalb des unteren Transportbandes 31 in einem nicht von dem oberen Transportband 32 abgedeckten Bereich ein Streuer 36 zum gleichmässig flächigen Aufstreuen eines Granulats auf das untere Transportband 31 vorgesehen. Der genaue Aufbau der Vorrichtung ist in der EP 1 045 751 B1 und der DE 197 51 516 A1 detailliert beschrieben.

Das aus den Abschnitten 100 mindestens einer Schalldämm-Verbund-Schwerfolie mittels des in den Figuren 1 bis 3 gezeigten Verfahrens hergestellte fremdstoffarme Schwerfolien-Granulat 110 wird mittels des Streuers 36 in dem Vorwärmabschnitt 33 gleichmässig flächig auf das hitzebeständige untere Transportband 31 zu einer flächigen Ausgangsschicht 300 vorgegebener Höhe aufgestreut. Die Ausgangsschicht 300 wird mit dem hitzebeständigen oberen Transportband 32 abgedeckt. Die Ausgangsschicht 300 wird durch den Heizabschnitt 34 und den Abkühlabschnitt 35 mittels synchronen Bewegens des unteren Transportbandes 31 und des oberen Transportbandes 32 geführt. Hierbei wird der Abstand zwischen dem unteren Transportband 31 und dem oberen Transportband 32 im Heizabschnitt 34 und im Abkühlabschnitt 35 im Wesentlichen gleich der Dicke der fertigen Recycling-Kunststoffschwerfolie 310 gehalten, so dass das Schwerfolien-Granulat 110 einem vorgegebenen Druckbereich ausgesetzt ist. Insbesondere der Druckbereich, die Temperatur im Heizabschnitt 34 und die Fördergeschwindigkeit sind derart gewählt, dass im Heizabschnitt 34 eine Ineinanderfliessen und Untereinanderverschmelzen des Schwerfolien-Granulats 110 erfolgt, so dass die aus dem Abkühlabschnitt 35 geführte Schicht die Recycling-Kunststoffschwerfolie 310 bildet. Vorzugsweise findet hierbei im Heizabschnitt 34 ein nur teilweises Ineinanderfliessen und Untereinanderverschmelzen des Schwerfolien-Granulats 110 statt, so dass die Recycling-Kunststoffschwerfolie eine poröse Beschaffenheit aufweist und die sich durch die Granulatteilchen ergebende poröse Struktur zum Teil erhalten bleibt, wodurch die beschriebenen verbesserten Eigenschaften der Kunststoffschwerfolie erreicht werden können.

Die beiden beschriebenen Verfahrensabschnitte der Herstellung eines fremdstoffarmen und thermisch fügbaren Schwerfolien-Granulats aus Abschnitten mindestens einer Schalldämm-Verbund-Schwerfolie und der Herstellung einer Recycling-Kunststoffschwerfolie können mittels eines zusammenhängenden Verfahrens in einer zusammenhängenden Prozesskette oder auch getrennt in Form örtlich und zeitlich getrennter Verfahren ablaufen. So ist es selbstverständlich möglich, die Herstellung des Schwerfolien-Granulats und die Herstellung der Recycling-Kunststoffschwerfolie aus dem Schwerfolien-Granulat an unterschiedlichen Orten durchzuführen und die beiden Verfahren somit örtlich und zeitlich zu trennen. Weiters besteht die Möglichkeit, diese beiden Verfahren jeweils in separate Unterverfahren aufzuteilen, die ebenfalls zeitlich und/oder örtlich getrennt sein können. Diese Varianten werden von der Erfindung ebenfalls umfasst.

## Patentansprüche

1. Verfahren zur Herstellung eines fremdstoffarmen und thermisch fügbaren Schwerfolien-Granulats (110) aus Abschnitten (100) mindestens einer Schalldämm-Verbund-Schwerfolie,
wobei die Verbund-Schwerfolie zumindest
• eine Schwerfolienschicht, die sich im Wesentlichen aus
□ thermoplastischen Polymeren und
□ mineralischen Füllstoffen
zusammensetzt, und
• eine Fremdstoffschicht, die sich im Wesentlichen aus
□ Fasern, insbesondere Textilfasern, Naturfasern, Glasfasen und/oder Kunststofffasern, sowie
□ Schaumstoffen,
□ Nicht-Schwerfolien-Kunststofffolien und/oder
□ Metallfolien
zusammensetzt,
aufweist,
mit den Schritten
• Beschicken eines Vorzerkleinerers (2) mit den Abschnitten (100) der Verbund-Schwerfolie,
• Vorzerkleinern der Abschnitte (100) in vorzerkleinerte Abschnitte (101) begrenzter Grösse mittels des Vorzerkleinerers (2),
• mengenkonstantes kontinuierliches Beschicken eines Nachzerkleinerer (4) mit den vorzerkleinerten Abschnitten (101),
• kontinuierliches Nachzerkleinern der vorzerkleinerten Abschnitten (101) in nachzerkleinertes Mahlgut (102) mit einer Korngrösse von maximal 10 mm, insbesondere maximal 8 mm, durch Schneiden und Reiben mittels des Nachzerkleinerers (4),
• kontinuierliches Fördern des nachzerkleinerten Mahlguts (102) von dem Nachzerkleinerer (4) in einen Windsichter (6),
• kontinuierliches Abtrennen eines vorgebbaren Anteils eines im Wesentlichen Faser- und/oder Schaumstoffanteile enthaltenden Leichtanteils (201) - bezogen auf den Schwerfolienschichtanteil - im nachzerkleinerten Mahlgut (102) durch Durchströmen des Mahlguts (102) mit einem Sichtluftstrom (6a) in dem Windsichter (6),
• Fördern des windgesichteten Mahlguts (103) von dem Windsichter (6) in ein Abscheidungs- und Siebungssystem (8, 10, 12), und
• Abtrennen eines im Wesentlichen streifenartige Partikel, Faserklumpen, Staubklumpen, Metalle und sonstige Fremdstoffe enthaltenden Störstoffanteils (202, 203, 204, 205) im windgesichteten Mahlgut (103) durch das Abscheidungs- und Siebungssystem (8, 10, 12), so dass das restliche Mahlgut das fremdstoffarme Schwerfolien-Granulat (110) bildet.

2. Verfahren nach Anspruch 1,
**dadurch gekennzeichnet, dass**
• der Vorzerkleinerer als Mehrwellenschredder (2) mit mindestens zwei langsamlaufenden Schneidwellen (2a) ausgebildet ist.

3. Verfahren nach Anspruch 1 oder 2,
**dadurch gekennzeichnet, dass**
• das mengenkonstante kontinuierliche Beschicken des Nachzerkleinerer (4) mit den vorzerkleinerten Abschnitten (101) mittels eines ersten Transportbandes (3) erfolgt.

4. Verfahren nach einem der Ansprüche 1 bis 3,
**dadurch gekennzeichnet, dass**
• der Nachzerkleinerer als Schneidmühle (4) ausgebildet ist.

5. Verfahren nach Anspruch 4,
**dadurch gekennzeichnet, dass**
• die Schneidmühle (4) eine Sieblochweite von 3 mm bis 12 mm, insbesondere von 6 mm bis 8 mm, aufweist.

6. Verfahren nach einem der Ansprüche 1 bis 5,
**dadurch gekennzeichnet, dass**
das kontinuierliche Fördern des nachzerkleinerten Mahlguts (102) von dem Nachzerkleinerer (4) in den Windsichter (6) mittels eines pneumatischen Fördersystems (5) erfolgt.

7. Verfahren nach einem der Ansprüche 1 bis 6,
**dadurch gekennzeichnet, dass**
der Windsichter als ein Steigrohrsichter (6) ausgebildet ist.

8. Verfahren nach Anspruch 7,
**dadurch gekennzeichnet, dass**
der Steigrohrsichter als Zick-Zack-Sichter (6) ausgebildet ist.

9. Verfahren nach einem der Ansprüche 1 bis 8,
**dadurch gekennzeichnet, dass**
• das Abscheidungs- und Siebungssystem mindestens eine zum Absieben von streifenartige Partikel, Faserklumpen und Staubklumpen (202) ausgebildete Siebmaschine (8) aufweist und
• im Schritt des Abtrennens des Störstoffanteils Faserklumpen und Staubklumpen (202) aus dem Mahlgut (103) abgetrennt werden.

10. Verfahren nach Anspruch 9,
**dadurch gekennzeichnet, dass**
die Siebmaschine (8) erste Siebe (8a) mit einer Sieblochweite von 3 mm bis 12 mm aufweist.

11. Verfahren nach einem der Ansprüche 1 bis 10,
**dadurch gekennzeichnet, dass**
• das Abscheidungs- und Siebungssystem mindestens einen zum Abscheiden von ferromagnetischen Metallpartikeln ausgebildeten Fe-Metallabscheider (10) aufweist und
• im Schritt des Abtrennens des Störstoffanteils ferromagnetische Metallpartikel (203) aus dem Mahlgut (104) abgetrennt werden.

12. Verfahren nach einem der Ansprüche 1 bis 11,
**dadurch gekennzeichnet, dass**
• das Abscheidungs- und Siebungssystem (12) zum im Wesentlichen vollständigen Abscheiden eines im Wesentlichen Nichteisenmetalle und sonstige Fremdstoffe enthaltenden Schwerstörstoffanteils (204) im Mahlgut (105) ausgebildet ist und
• im Schritt des Abtrennens des Störstoffanteils der Schwerstörstoffanteil (204) - bezogen auf den Schwerfolienschichtanteil - im Mahlgut (105) abgetrennt wird.

13. Verfahren nach Anspruch 12,
**dadurch gekennzeichnet, dass**
• das Abscheidungs- und Siebungssystem mindestens eine Trenntischmaschine (12) mit mindestens einem als schiefe Ebene angeordneten, vibrierenden und mit einem Luftstrom (12c) beaufschlagten zweiten Sieb (12a) zum Abscheiden des Schwerstörstoffanteils (204) aufweist.

14. Verfahren nach Anspruch 13,
**dadurch gekennzeichnet, dass**
• die Trenntischmaschine (12) eine Absaugung (12b) zum Abführen eines Staubanteils (205) im Mahlgut (105) aufweist.

15. Verfahren nach Anspruch 12,
**dadurch gekennzeichnet, dass**
• das Abscheidungs- und Siebungssystem mindestens einen zweiten Windsichter, insbesondere einen zweiten Zick-Zack-Sichter (12') zum Abscheiden des Schwerstörstoffanteils (204) aufweist.

16. Verfahren nach einem der Ansprüche 1 bis 15,
**gekennzeichnet durch** die weiteren Schritte
• Fördern des Schwerfolien-Granulats (110) von dem Abscheidungs- und Siebungssystem (8, 10, 12) zu einer Abfüllanlage (14) und
• Abfüllen des Schwerfolien-Granulats (110) in mindestens ein Transportbehältnis (120) **durch** die Abfüllanlage (14).

17. Verfahren zur Herstellung einer Recycling-Kunststoffschwerfolie (310) aus Abschnitten (100) mindestens einer Schalldämm-Verbund-Schwerfolie, mit den Schritten
• Herstellen eines fremdstoffarmen Schwerfolien-Granulats (110) durch das Verfahren nach einem der Ansprüche 1 bis 15,
• gleichmässig flächiges Aufstreuen des Schwerfolien-Granulats (110) auf ein hitzebeständiges unteres Transportband (31) zu einer flächigen Ausgangsschicht (300) vorgegebener Höhe, insbesondere in einem Vorwärmabschnitt (33),
• Abdecken der Ausgangsschicht (300) mit einem hitzebeständigen oberen Transportband (32),
• derartiges Führen der Ausgangsschicht (300) durch
□ einen Heizabschnitt (34) und
□ einen Abkühlabschnitt (35)
mittels synchronen Bewegens des unteren Transportbandes (31) und des oberen Transportbandes (32), wobei
□ der Abstand zwischen dem unteren Transportband (31) und dem oberen Transportband (32) im Heizabschnitt (34) und im Abkühlabschnitt (35) im Wesentlichen gleich der Dicke der fertigen Recycling-Kunststoffschwerfolie (310) gehalten wird, so dass das Schwerfolien-Granulat (110) einem vorgegebenen Druckbereich ausgesetzt ist,
dass im Heizabschnitt (34) eine Ineinanderfliessen und Untereinanderverschmelzen des Schwerfolien-Granulats (110) erfolgt, so dass die aus dem Abkühlabschnitt (35) geführte Schicht die Recycling-Kunststoffschwerfolie (310) bildet.

18. Verfahren nach Anspruch 17, wobei
das Führen der Ausgangsschicht (300) durch den Heizabschnitt (34) derart erfolgt, dass im Heizabschnitt (34) ein nur teilweises Ineinanderfliessen und Untereinanderverschmelzen des Schwerfolien-Granulats (110) erfolgt, so dass die Recycling-Kunststoffschwerfolie eine poröse Beschaffenheit aufweist.

19. Schwerfolien-Recyclinganlage (1) zur Durchführung eines Verfahrens nach einem der Ansprüche 1 bis 16,
**gekennzeichnet durch**
• einen Vorzerkleinerer (2), der zum Vorzerkleinern von Abschnitten (100) einer Verbund-Schwerfolie in vorzerkleinerte Abschnitte (101) begrenzter Grösse ausgebildet ist,
• einem Nachzerkleinerer (4), der zum kontinuierlichen Nachzerkleinern der vorzerkleinerten Abschnitten (101) in nachzerkleinertes Mahlgut (102) mit einer Korngrösse von maximal 10 mm, insbesondere maximal 8 mm, **durch** Schneiden und Reiben ausgebildet ist,
• einem ersten Fördersystem (3), insbesondere einem ersten Transportband (3), das zwischen dem Vorzerkleinerer (2) und dem Nachzerkleinerer (4) angeordnet ist und zum mengenkonstanten kontinuierlichen Beschicken des Nachzerkleinerers (4) mit den vorzerkleinerten Abschnitten (101) ausgebildet ist,
• einem Windsichter (6), der zum kontinuierlichen Abtrennen eines vorgebbaren Anteils eines im Wesentlichen Fasern- und/oder Schaumstoffanteile enthaltenden Leichtanteils (201) - bezogen auf den Schwerfolienschichtanteil - im nachzerkleinerten Mahlgut (102) **durch** Durchströmen des Mahlguts (102) mit einem Sichtluftstrom (6a) ausgebildet ist,
• einem zweiten Fördersystem (5), insbesondere ein pneumatisches Fördersystem (5), das zum kontinuierlichen Fördern des nachzerkleinerten Mahlguts (102) von dem Nachzerkleinerer (4) in den Windsichter (6) ausgebildet ist,
• einem Abscheidungs- und Siebungssystem (8, 10, 12), das zum Abtrennen eines im Wesentlichen streifenartige Partikel, Faserklumpen, Staubklumpen, Metalle und sonstige Fremdstoffe enthaltenden Störstoffanteils (202, 203, 204, 205) im windgesichteten Mahlgut (103) ausgebildet ist, und
• einem dritten und/oder vierten Fördersystem (7; 9), das zum Fördern des windgesichteten Mahlguts (103) von dem Windsichter (6) in das Abscheidungs- und Siebungssystem (8, 10, 12) ausgebildet ist.

20. Schwerfolien-Recyclinganlage (1) nach Anspruch 19,
**dadurch gekennzeichnet, dass**
der Vorzerkleinerer als Mehrwellenschredder (2) mit mindestens zwei langsamlaufenden Schneidwellen (2a) ausgebildet ist.

21. Schwerfolien-Recyclinganlage (1) nach Anspruch 19 oder 20,
**dadurch gekennzeichnet, dass**
der Nachzerkleinerer als Schneidmühle (4) ausgebildet ist.

22. Schwerfolien-Recyclinganlage (1) nach Anspruch 21,
**dadurch gekennzeichnet, dass**
die Schneidmühle (4) eine Sieblochweite von 3 mm bis 12 mm, insbesondere von 6 mm bis 8 mm, aufweist.

23. Schwerfolien-Recyclinganlage (1) nach einem der Ansprüche 19 bis 22,
**dadurch gekennzeichnet, dass**
der Windsichter als ein Steigrohrsichter (6), insbesondere ein Zick-Zack-Sichter (6) ausgebildet ist.

24. Schwerfolien-Recyclinganlage (1) nach einem der Ansprüche 19 bis 23,
**dadurch gekennzeichnet, dass**
das Abscheidungs- und Siebungssystem mindestens eine zum Absieben von Faserklumpen und Staubklumpen (202) aus dem Mahlgut (103) ausgebildete Siebmaschine (8), die insbesondere erste Siebe (8a) mit einer Sieblochweite von 3 mm bis 12 mm besitzt, aufweist.

25. Schwerfolien-Recyclinganlage (1) nach einem der Ansprüche 19 bis 24,
**dadurch gekennzeichnet, dass**
das Abscheidungs- und Siebungssystem mindestens einen zum Abscheiden von ferromagnetischen Metallpartikeln (203) aus dem Mahlgut (104) ausgebildeten Fe-Metallabscheider (10) aufweist.

26. Schwerfolien-Recyclinganlage (1) nach einem der Ansprüche 19 bis 25,
**dadurch gekennzeichnet, dass**
das Abscheidungs- und Siebungssystem zum im Wesentlichen vollständigen Abscheiden eines im Wesentlichen Nichteisenmetalle und sonstige Fremdstoffe enthaltenden Schwerstörstoffanteils (204) im Mahlgut (105) ausgebildet ist.

27. Schwerfolien-Recyclinganlage (1) nach Anspruch 26,
**dadurch gekennzeichnet, dass**
das Abscheidungs- und Siebungssystem mindestens eine Trenntischmaschine (12) mit mindestens einem als schiefe Ebene angeordneten, vibrierenden und mit einem Luftstrom (12c) beaufschlagten zweiten Sieb (12a) zum im Wesentlichen vollständigen Abscheiden des Schwerstörstoffanteils (204) im Mahlgut (105) aufweist.

## Claims

1. Method for manufacturing a low-impurity and thermally joinable heavy-duty film granulate (110) from sections (100) of at least one sound-insulating heavy-duty composite film,
wherein the heavy-duty composite film has at least
• one heavy-duty film layer which is composed substantially of
- thermoplastic polymers and
- mineral fillers, and
• one impurity layer which is composed substantially of
- fibres, in particular textile fibres, natural fibres, glass fibres and/or plastic fibres, and
- foamed materials,
- non-heavy-duty-film plastic films and/or
- metal foils
comprising the steps:
• feeding a pre-comminuter (2) with the sections (100) of the heavy-duty composite film,
• pre-comminuting the sections (100) into pre-comminuted sections (101) of limited size by means of the pre-comminuter (2),
• continuously feeding a post-comminuter (4) with a constant quantity of the pre-comminuted sections (101),
• continuously post-comminuting the pre-comminuted sections (101) into post-comminuted ground stock (102) having a grain size of at most 10 mm, in particular at most 8 mm, by cutting and rubbing by means of the post-comminuter (4),
• continuously conveying the post-comminuted ground stock (102) from the post-comminuter (4) into an air classifier (6),
• continuously separating a predeterminable portion of a light fraction (201) - in relation to the heavy-duty film layer fraction - in the post-comminuted ground stock (102) by passing a classifying air flow (6a) through the ground stock (102) in the air classifier (6), said light fraction (201) containing substantially fibre portions and/or foamed material portions,
• conveying the air-classified ground stock (103) from the air classifier (6) into a separating and screening system (8, 10, 12), and
• separating a disruptive material fraction (202, 203, 204, 205), containing substantially strip-shaped particles, fibre clumps, dust clumps, metals and other impurities, in the air-classified ground stock (103) by the separating and screening system (8, 10, 12), such that the remaining ground stock forms the low-impurity heavy-duty film granulate (110).

2. Method according to Claim 1,
**characterized in that**
• the pre-comminuter is designed as a multi-shaft shredder (2) having at least two slow-speed cutting shafts (2a).

3. Method according to Claim 1 or 2,
**characterized in that**
• the continuous feeding of the post-comminuter (4) with a constant quantity of the pre-comminuted sections (101) is effected by means of a first conveyor belt (3).

4. Method according to any one of Claims 1 to 3,
**characterized in that**
• the post-comminuter is designed as a cutting mill (4).

5. Method according to Claim 4,
**characterized in that**
• the cutting mill (4) has a screening hole width of 3 mm to 12 mm, in particular of 6 mm to 8 mm.

6. Method according to any one of Claims 1 to 5,
**characterized in that**
the continuous conveying of the post-communited ground stock (102) from the post-comminuter (4) into the air classifier (6) is effected by means of a pneumatic conveying system (5).

7. Method according to any one of Claims 1 to 6,
**characterized in that**
the air classifier is designed as a rising-pipe classifier (6).

8. Method according to Claim 7,
**characterized in that**
the rising-pipe classifier is designed as a zigzag classifier (6).

9. Method according to any one of Claims 1 to 8,
**characterized in that**
• the separating and screening system has at least one screening machine (8) designed for screening strip-shaped particles, fibre clumps and dust clumps (202), and
• in the step for separating the disruptive material fraction, fibre clumps and dust clumps (202) are separated from the ground stock (103).

10. Method according to Claim 9,
**characterized in that**
• the screening machine (8) has first screens (8a) with a screening hole width of 3 mm to 12 mm.

11. Method according to any one of Claims 1 to 10,
**characterized in that**
• the separating and screening system has at least one Fe-metal separator (10) designed for separating ferromagnetic metal particles and
• in the step for separating the disruptive material fraction, ferromagnetic metal particles (203) are separated from the ground stock (104).

12. Method according to any one of Claims 1 to 11,
**characterized in that**
• the separating and screening system (12) is designed for substantially completely separating a heavy disruptive material fraction (204), containing substantially non-ferrous metals and other impurities, in the ground stock (105) and
• in the step for separating the disruptive material fraction, the heavy disruptive material fraction (204) - in relation to the heavy-duty film layer fraction - in the ground stock (105) is separated.

13. Method according to Claim 12,
**characterized in that**
• the separating and screening system has at least one separating-table machine (12) having at least one vibrating second screen (12a), which is arranged as an inclined plane and is subjected to an air flow (12c), for separating the heavy disruptive material fraction (204).

14. Method according to Claim 13,
**characterized in that**
• the separating-table machine (12) has an extractor (12b) for discharging a dust fraction (205) in the ground stock (105).

15. Method according to Claim 12,
**characterized in that**
• the separating and screening system has at least one second air classifier, in particular a second zigzag classifier (12'), for separating the heavy disruptive material fraction (204).

16. Method according to any one of Claims 1 to 15,
**characterized by** the further steps
• conveying the heavy-duty film granulate (110) from the separating and screening system (8, 10, 12) to a filling unit (14) and
• filling at least one transport container (120) with the heavy-duty film granulate (110) by means of the filling unit (14).

17. Method for manufacturing a recycling heavy-duty plastic film (310) from sections (100) of at least one sound-insulating heavy-duty composite film,
comprising the steps
• manufacturing a low-impurity heavy-duty film granulate (110) by the method according to any one of Claims 1 to 15,
• uniformly spreading the heavy-duty film granulate (110) in a planar manner over a heat-resistant bottom conveyor belt (31) to form a planar initial layer (300) of predetermined height, in particular in a pre-heating section (33),
• covering the initial layer (300) with a heat-resistant top conveyor belt (32),
• directing the initial layer (300) through
- a heating section (34) and
- a cooling section (35)
by means of synchronous movement of the bottom conveyor belt (31) and of the top conveyor belt (32), wherein
- the distance between the bottom conveyor belt (31) and the top conveyor belt (32) in the heating section (34) and in the cooling section (35) is kept substantially the same as the thickness of the finished recycling heavy-duty plastic film (310), such that the heavy-duty film granulate (110) is subjected to a predetermined pressure range,
in such a way that the heavy-duty film granulate (110) interflows and fuses together in the heating section (34), such that the layer directed out of the cooling section (35) forms the recycling heavy-duty plastic film (310).

18. Method according to Claim 17, wherein
the initial layer (300) is directed through the heating section (34) in such a way that the heavy-duty film granulate (110) only partly interflows and fuses together in the heating section (34), such that the recycling heavy-duty plastic film has a porous nature.

19. Heavy-duty film recycling apparatus (1) for carrying out a method according to any one of Claims 1 to 16,
**characterized by**
• a pre-comminuter (2) which is designed for pre-comminuting sections (100) of a heavy-duty composite film into pre-comminuted sections (101) of limited size,
• a post-comminuter (4) which is designed for continuously post-comminuting the pre-comminuted sections (101) into post-comminuted ground stock (102) having a grain size of at most 10 mm, in particular at most 8 mm, by cutting and rubbing,
• a first conveying system (3), in particular a first conveyor belt (3), which is arranged between the pre-comminuter (2) and the post-comminuter (4) and is designed for continuously feeding the post-comminuter (4) with a constant quantity of the pre-comminuted sections (101),
• an air classifier (6) which is designed for continuously separating a predeterminable portion of a light fraction (201) - in relation to the heavy-duty film layer fraction - in the post-comminuted ground stock (102) by passing a classifying air flow (6a) through the ground stock (102), said light fraction (201) containing substantially fibre portions and/or foamed material portions,
• a second conveying system (5), in particular a pneumatic conveying system (5), which is designed for continuously conveying the post-comminuted ground stock (102) from the post-comminuter (4) into the air classifier (6),
• a separating and screening system (8, 10, 12) which is designed for separating a disruptive material fraction (202, 203, 204, 205), containing substantially strip-shaped particles, fibre clumps, dust clumps, metals and other impurities, in the air-classified ground stock (103), and
• a third and/or fourth conveying system (7; 9) which is designed for conveying the air-classified ground stock (103) from the air classifier (6) into the separating and screening system (8, 10, 12).

20. Heavy-duty film recycling apparatus (1) according to Claim 19, **characterized in that**
the pre-comminuter is designed as a multi-shaft shredder (2) having at least two slow-speed cutting shafts (2a).

21. Heavy-duty film recycling apparatus (1) according to Claim 19 or 20,
**characterized in that**
the post-comminuter is designed as a cutting mill (4).

22. Heavy-duty film recycling apparatus (1) according to Claim 21,
**characterized in that** the cutting mill (4) has a screening hole width of 3 mm to 12 mm, in particular of 6 mm to 8 mm.

23. Heavy-duty film recycling apparatus (1) according to any one of Claims 19 to 22,
**characterized in that**
the air classifier is designed as a rising-pipe classifier (6), in particular a zigzag classifier (6).

24. Heavy-duty film recycling apparatus (1) according to any one of Claims 19 to 23,
**characterized in that**
the separating and screening system has at least one screening machine (8) which is designed for screening fibre clumps and dust clumps (202) from the ground stock (103) and which has in particular first screens (8a) with a screening hole width of 3 mm to 12 mm.

25. Heavy-duty film recycling apparatus (1) according to any one of Claims 19 to 24,
**characterized in that**
the separating and screening system has at least one Fe-metal separator (10) designed for separating ferromagnetic metal particles (203) from the ground stock (104).

26. Heavy-duty film recycling apparatus (1) according to any one of Claims 19 to 25,
**characterized in that**
the separating and screening system is designed for substantially completely separating a heavy disruptive material fraction (204), containing substantially non-ferrous metals and other impurities, in the ground stock (105).

27. Heavy-duty film recycling apparatus (1) according to Claim 26,
**characterized in that**
the separating and screening system has at least one separating-table machine (12) having at least one vibrating second screen (12a), which is arranged as an inclined plane and is subjected to an air flow (12c), for substantially completely separating the heavy disruptive material fraction (204) in the ground stock (105).

## Revendications

1. Procédé de fabrication d'un granulat à feuille lourde (110) à faible teneur en substances étrangères et thermosoudable, à partir de tronçons (100) d'au moins une feuille lourde composite d'isolation acoustique,
la feuille lourde composite présentant au moins
• une couche de feuille lourde, se composant essentiellement
■ de polymères thermoplastiques, et
■ de charges minérales, et
• une couche de substance étrangère, se composant essentiellement
■ de fibres, en particulier de fibres textiles, fibres naturelles, fibres de verre et/ou fibres de matière synthétique, ainsi que de
■ matériaux alvéolaires,
■ feuilles de matière synthétique n'étantpas des feuilles lourdes et/ou
■ feuilles métalliques,
avec les étapes de :
• chargement d'un pré-broyeur (2) avec les tronçons (100) de la feuille lourde composite,
• pré-broyage des tronçons (100) en des tronçons (101) pré-broyés, de grosseur limitée, au moyen du pré-broyeur (2),
• chargement continu, en quantités constantes, d'un post-broyeur (4) avec les tronçons (101) pré-broyés,
• post-broyage continu des tronçons (101) pré-broyés, en un produit broyé (102) post-broyé d'une grosseur de gain maximale de 10 mm, en particulier maximale de 8 mm, par découpage et friction au moyen du post-broyeur (4),
• transport continu du produit broyé (102) post-broyé par le post-broyeur (4), dans un séparateur pneumatique (6),
• séparation continue d'une fraction prédéterminable d'une fraction légère (201) contenant essentiellement des fractions de fibres et/ou de substance alvéolaire - en se référant à la fraction de couche de feuilles lourdes - en un produit broyé (102) post-broyé, par passage du produit broyé (102), avec un écoulement d'air de classement (6a), dans le séparateur pneumatique (6),
• transport du produit broyé (103), ayant subi une séparation pneumatique, du séparateur pneumatique (6) en un système de séparation et de tamisage (8, 10, 12), et
• séparation d'une fraction de substances parasites (202, 203, 204, 205), contenant essentiellement des particules en forme de bandes, des mottes de fibres, des mottes de poussière, des métaux et d'autres substances étrangères, se trouvant dans le produit broyé (103) ayant subi une séparation pneumatique, par le système de séparation et de tamisage (8, 10, 12), de manière que le produit broyé restant forme le granulat à feuille lourde (110) pauvre en substances étrangères.

2. Procédé selon la revendication 1,
**caractérisé en ce que**
• le pré-broyeur est réalisé sous forme de déchiqueteur à plusieurs arbres (2), avec au moins deux arbres de découpage (2a) à mouvement lent.

3. Procédé selon la revendication 1 ou 2,
**caractérisé en ce que**
• le chargement continu, en quantités constantes, du post-broyeur (4) avec les tronçons (101) pré-broyés s'effectue au moyen d'une première bande transporteuse (3).

4. Procédé selon l'une des revendications 1 à 3,
**caractérisé en ce que**
• le post-broyeur est réalisé sous forme de broyeur à couteaux (4).

5. Procédé selon la revendication 4,
**caractérisé en ce que**
• le broyeur à couteaux (4) présente une dimension de tamisage de 3 mm à 12 mm, en particulier de 6 mm à 8 mm.

6. Procédé selon l'une des revendications 1 à 5,
**caractérisé en ce que**
• le transport continu du produit broyé (102) post-broyé, du post-broyeur (4) en le séparateur pneumatique (6), s'effectue au moyen d'un système de transport pneumatique (5).

7. Procédé selon l'une des revendications 1 à 6,
**caractérisé en ce que**
• le séparateur pneumatique est réalisé sous forme de séparateur à tube montant (6).

8. Procédé selon la revendication 7,
**caractérisé en ce que**
• le séparateur à tube montant est réalisé sous forme de séparateur à parcours en zig-zag (6).

9. Procédé selon l'une des revendications 1 à 8,
**caractérisé en ce que**
• le système de séparation et de tamisage présente au moins une tamiseuse (8), réalisée pour séparer par tamisage des particules en forme de bande, des mottes de fibres et des mottes de poussière (202), et
• des mottes de fibres et des mottes de poussière (202) sont séparées du produit broyé (103), à l'étape de séparation de la fraction des substances parasites.

10. Procédé selon la revendication 9,
**caractérisé en ce que**
• la tamiseuse (8) présente des premiers tamis (8a) d'une dimension de tamisage de 3 mm à 12 mm.

11. Procédé selon l'une des revendications 1 à 10,
**caractérisé en ce que**
• le système de séparation et de tamisage présente au moins un séparateur de métaux ferreux (10), réalisé pour séparer des particules métalliques ferromagnétiques, et
• à l'étape de séparation de la fraction de substances parasites, des particules métalliques (203) ferromagnétiques sont séparées du produit broyé (104).

12. Procédé selon l'une des revendications 1 à 11,
**caractérisé en ce que**
• le système de séparation et de tamisage (12) est réalisé pour séparer pratiquement complètement une fraction de substances parasites lourdes (204), contenant essentiellement des métaux non ferreux et d'autres substances étrangères, présente dans le produit broyé (105), et
• à l'étape de séparation de la fraction de substances parasites, la fraction de substances parasites lourdes (204) - en se référant à la fraction de couches de feuilles lourdes - présente dans le produit broyé (105) est séparée.

13. Procédé selon la revendication 12,
**caractérisé en ce que**
• le système de séparation et de tamisage présente au moins une machine à table de séparation (12) avec au moins un deuxième tamis (12a), disposé sous forme de plan oblique, vibrant et sollicité avec un écoulement d'air (12c), pour la séparation de la fraction de matériau parasite lourd (204) .

14. Procédé selon la revendication 13,
**caractérisé en ce que**
• la machine à table de séparation (12) présente une aspiration (12b) pour l'évacuation d'une fraction de poussières (205) présente dans le produit broyé (105).

15. Procédé selon la revendication 12,
**caractérisé en ce que**
• le système de séparation et de tamisage présente au moins un deuxième séparateur pneumatique, en particulier un deuxième séparateur à parcours en zig-zag (12'), pour la séparation de la fraction de substances parasites lourdes (204).

16. Procédé selon l'une des revendications 1 à 15,
**caractérisé par** les étapes supplémentaire de :
• transport du granulat à feuille lourde (110), du système de séparation et de tamisage (8, 10, 12) à une installation de remplissage (14), et
• remplissage d'au moins un récipient de transport (120) par le granulat à feuille lourde (110), par l'installation de remplissage (14).

17. Procédé de fabrication d'une feuille lourde en matière synthétique de recyclage (310) composée de tronçons (100) d'au moins une feuille lourde composite d'isolation acoustique, comprenant les étapes consistant à :
• fabriquer un granulat à feuille lourde (110) pauvre en substances étrangères, par le procédé selon l'une des revendications 1 à 15,
• disperser régulièrement à plat le granulat à feuille lourde (110) sur une bande transporteuse inférieure (31) résistant à la chaleur, pour obtenir une couche initiale (300) plate, de hauteur prédéterminée, en particulier en un tronçon de pré-chauffage (33),
• recouvrir la couche initiale (300) avec une bande transporteuse supérieure (32) résistant à la chaleur,
• guider de cette manière la couche initiale (300) à travers :
■ un tronçon de chauffage (34) et
■ un tronçon de refroidissement (35),
au moyen d'un déplacement synchrone de la bande transporteuse inférieure (31) et de la bande transporteuse supérieure (32), où
■ l'espacement, entre la bande transporteuse inférieure (31) et la bande transporteuse supérieure (32), dans le tronçon de chauffage (34) et dans le tronçon de refroidissement (35), est maintenu sensiblement égal à l'épaisseur de la feuille lourde de matière synthétique de recyclage (310), de manière que le granulat à feuille lourde (110) soit exposé à une zone de pression prédéterminée,
en ce que, dans le tronçon de chauffage (34), est effectué un écoulement l'un dans l'autre et une mise en fusion entre eux des éléments du granulat à feuille lourde (110), de manière que la couche, guidée hors du tronçon de refroidissement (35), forme la feuille lourde de matière synthétique de recyclage (310).

18. Procédé selon la revendication 17, dans lequel le guidage de la couche initiale (300) à travers le tronçon de chauffage (34) s'effectue de manière que, dans le tronçon de chauffage (34), s'effectue un écoulement l'un dans l'autre et une mise en fusion entre eux des éléments du granulat à feuille lourde (110) qui ne soient que partiels, de manière que la feuille lourde de matière synthétique de recyclage présente un caractère poreux.

19. Installation de recyclage de feuille lourdes (1), pour mettre en oeuvre un procédé selon l'une des revendications 1 à 16,
**caractérisé par**
• un pré-broyeur (2), réalisé pour pré-broyer des tronçons (100) d'une feuille lourde composite en tronçons (101) pré-broyés de grosseur limitée,
• un post-broyeur (4), réalisé pour post-broyer en continu les tronçons (101) pré-broyés en un produit broyé (102) post-broyé, avec unetaille de grains maximale de 10 mm, en particulier maximale de 8 mm,par découpage et friction,
• un premier système de transport (3), en particulier une première bande transporteuse (3), disposée entre le pré-broyeur (2) et le post-broyeur (4), et pour charger de manière continue, en quantités constantes, le post-broyeur (4) avec les tronçons (101) pré-broyés,
• un séparateur pneumatique (6), réalisé pour assurer la séparation continue d'une fraction prédéterminable d'une fraction légère (201), contenant essentiellement des fractions de fibres et de matériau alvéolaire - en se référant à la fraction de couche de feuille lourde - présente dans le produit produit post-broyé (102), par passage d'un écoulement de produit broyé (102), avec un écoulement d'air de classement (6a),
• un deuxième système de transport (5), en particulier un système de transport pneumatique (5), réalisé pour assurer le tranport continu du produit broyé (102) post-broyé, du post-broyeur (4) au séparateur pneumatique (6),
• un système de séparation et de tamisage (8, 10, 12), réalisé pour séparer une fraction de substances parasites (202, 203, 204, 205), contenant essentiellement des particules en forme de bandes, des mottes de fibres, des mottes de poussière, des métaux et d'autres substances étrangères, se trouvant dans le produit broyé (103), et
• un troisième et/ou quatrième système de transport (7 ; 9), réalisé(s) pour transporter le produit broyé (103) ayant subi une séparation pneumatique, du séparateur pneumatique (6) au système de séparation et de tamisage (8, 10, 12).

20. Installation de recyclage de feuille lourdes (1) selon la revendication 19,
**caractérisé en ce que**
le pré-broyeur est réalisé sous forme de déchiqueteur à plusieurs arbres (2), avec au moins deux arbres de découpage (2a) à mouvement lent.

21. Installation de recyclage de feuille lourdes (1) selon la revendication 19 ou 20,
**caractérisé en ce que**
le post-broyeur est réalisé sous forme de broyeur à couteaux (4).

22. Installation de recyclage de feuille lourdes (1) selon la revendication 21,
**caractérisé en ce que**
le broyeur à couteaux (4) présente une dimension de tamisage de 3 mm à 12 mm, en particulier de 6 mm à 8 mm.

23. Installation de recyclage de feuille lourdes (1) selon l'une des revendications 19 à 22,
**caractérisé en ce que**
le séparateur pneumatique est réalisé sous forme de séparateur à tube montant (6), en particulier de séparateur pneumatique à parcours en zig-zag (6).

24. Installation de recyclage de feuille lourdes (1) selon l'une des revendications 19 à 23,
**caractérisé en ce que**
le système de séparation et de tamisage présente au moins une tamiseuse (8), réalisée pour séparer par tamisage des mottes de fibres et des mottes de poussière (202) hors du produit broyé (103),
la tamiseuse (8) présentant des premiers tamis (8a) d'une dimension de tamisage de 3 mm à 12 mm.

25. Installation de recyclage de feuille lourdes (1) selon l'une des revendications 19 à 24,
**caractérisé en ce que**
le système de séparation et de tamisage présente au moins un séparateur de métaux ferreux (10), réalisé pour séparer hors du produit broyé (103) des particules métalliques (203) ferromagnétiques.

26. Installation de recyclage de feuille lourdes (1) selon l'une des revendications 19 à 25,
**caractérisé en ce que**
le système de séparation et de tamisage est réalisé pour séparer pratiquement complètement une fraction de substances parasites lourdes (204), contenant essentiellement des métaux non ferreux et d'autres substances étrangères, présente dans le produit broyé (105).

27. Installation de recyclage de feuille lourdes (1) selon la revendication 26,
**caractérisé en ce que**
le système de séparation et de tamisage présente au moins une machine à table de séparation (12), avec au moins un deuxième tamis (12a), disposé sous forme de plan oblique, vibrant et sollicité avec un écoulement d'air (12c), pour la séparation pratiquement complète de la fraction de matériau parasite lourd (204) dans le produit broyé (105).
